# EUROPEAN PATENT SPECIFICATION

(11) **EP 2 708 446 B1**
(45) Date of publication and mention of the grant of the patent: **06.04.2016**
(21) Application number: 12782386.2
(22) Date of filing: 16.04.2012
(51) Int. Cl.: B62D 25/08, B62D 29/04

(54) **STRUCTURE FOR FRONT SECTION OF VEHICLE BODY**
STRUKTUR FÜR DEN VORDERTEIL EINER FAHRZEUGKAROSSERIE
STRUCTURE POUR SECTION AVANT DE CARROSSERIE DE VÉHICULE

(30) Priority: 11.05.2011 JP 2011106053
(43) Date of publication of application: 19.03.2014
(73) Proprietor: Toray Industries, Inc., Tokyo, 103-8666 (JP); Honda Motor Co., Ltd., Minato-ku Tokyo 107-8556 (JP)
(72) Inventor: MATSUMOTO Satoshi, Nagoya-shi Aichi 455-8502 (JP); KURODA Yoshito, Nagoya-shi Aichi 455-8502 (JP); KIMOTO Yukitane, Nagoya-shi Aichi 455-8502 (JP); TOMIDA Shoichi, Wako-shi Saitama 351-0193 (JP); GUNJI Yasuaki, Wako-shi Saitama 351-0193 (JP)
(74) Representative: Kador & Partner
(86) International application number: PCT/JP2012/060207
(87) International publication number: WO 2012/153602

(56) References cited:
- EP-A2- 1 211 164
- DE-A1- 10 051 617
- DE-A1-102004 007 571
- FR-A1- 2 783 795
- JP-A- 11 180 342
- JP-A- 2001 114 132
- JP-A- 2002 037 130
- JP-A- 2002 173 052
- JP-A- 2004 224 295

## Description

### Technical Field of the Invention

The present invention relates to a structure for a front section of a vehicle body, and specifically to a structure for a front section of a vehicle body in which a necessary rigidity as the whole of the structure is ensured while the weight is reduced and the pedestrian-protecting properties at the time of collision is enhanced.

### Background Art of the Invention

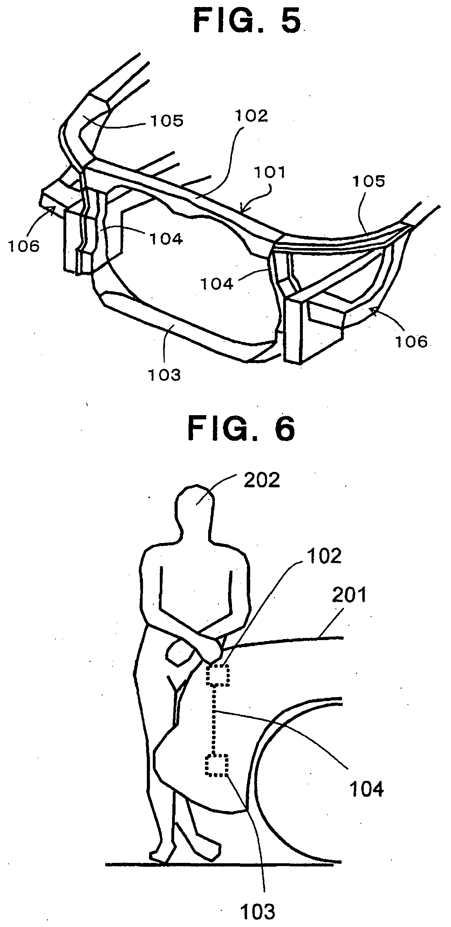

At a front section of a vehicle body, in particular, at a section around a front surface side of a radiator, usually, a structure for a front section of a vehicle body 101, for example, as shown in Fig. 5, is provided. For example, the vehicle body front section structure 101 comprises an upper section 102 that extends in a width direction of the vehicle in an upper part of the structure 101, a lower section 103 that extends in the width direction of the vehicle in a lower part of the structure, two side sections 104 that are connected to the upper section 102 and the lower section 103 on both ends thereof in the width direction of the vehicle and extend in a vertical direction, and upper side sections 105 that extend from both ends of the upper section 102 in a rearward direction of the vehicle body. Front side frames 106 are connected to side sections 104 and upper side sections 105, and the vehicle body front section structure 101 becomes a part of a vehicle body build frame.

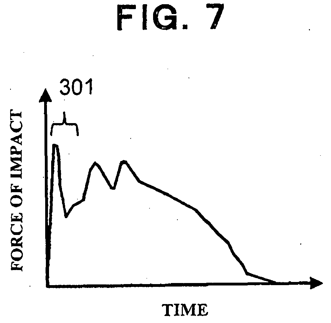

Such a vehicle body front section structure 101 is present, usually, as shown in Fig. 6, at a height position from a waist part through a leg part of a pedestrian 202 in a front section of vehicle body 201. When the pedestrian 202 has collided with the front section of vehicle body 201, because a great force of impact acts to the waist part and the leg part, a pedestrian-protecting property is required to the above-described vehicle body front section structure 101. In particular, because the above-described upper section 102 is present at a height at which the waist part or the thigh part of pedestrian 202 collides, a particularly high pedestrian-protecting property is required. Therefore, for example, in Patent document 1, a pedestrian is tried to be protected by using a hollow rectangle-shaped metal pipe as an impact-relieving member and making it absorb a collision energy by plastically deforming it at the time applied with impact to give it a high impact-absorbing property. On the other hand, as shown in Fig. 7, a force of impact received by the pedestrian 202 from the upper section 102 becomes maximum in a very short time 301 immediately after the collision. The degree of the damage received by the pedestrian at the collision greatly depends upon the received force of impact, and the greater the mass of the upper section (in particular, a section immediately close to the collision part) is, the higher the force of impact becomes. Therefore, because the closed cross-section frame made of metal disclosed in Patent document 1 is great in mass, even if the collision energy can be sequentially absorbed by the plastic deformation of the metal frame, a great damage is given to the pedestrian. Accordingly, although it is also considered that the upper section 102 is made lighter by using a resin material with a small specific gravity, because in a case made of a resin, it is broken at a form of brittle fracture differently from a case made of a metal, the upper section 102 is fractured disruptively at the time of collision with a pedestrian, and there is a possibility that the pedestrian receives a force of impact from an engine part and the like present at a position rear to the vehicle body front section structure 101. Further, also from the viewpoint of protecting a crew, if a hood engaging mechanism frequently provided to the upper section 102 falls off by the breaking of the upper section, opening of the hood occurs, and such a state is not preferred. In Patent document 2, a structure is disclosed wherein an impact energy is relieved by attaching a section of a bulk head (a vehicle body front section structure) corresponding to the upper section 102 rotatably toward a vehicle rear direction together with collision with a pedestrian. However, in this structure, because a space enough for rotation of the bulk head is required, it is difficult to apply it to a vehicle which cannot ensure such a space.

Further, because a function for maintaining the vehicle body is also required to the vehicle body front section structure 101 except strength, a structure which is too fragile as the whole is not preferable, and for example, a rigidity necessary for the vehicle body front section must be ensured such as a rigidity in the vertical direction of the vehicle body capable of supporting the weight of a hood. In Patent document 3, a structure is disclosed wherein an upper section and a lower section for a radiator support are formed from a metal having an open cross-section opening rearward, and a member connecting the upper section and the lower section and a reinforcement part (oblique ribs) for the upper section and the lower section are integrally molded with a resin together with the upper section and the lower section. However, with respect to the rigidity of the upper section, because the reinforcement part (oblique ribs) in the open cross-section of the upper section almost does not contribute to a rigidity in the forward/rearward direction of the vehicle body except a torsional rigidity, it cannot be expected to ensure a satisfactory rigidity. Further, because a metal is used for the upper section and the lower section, it is difficult to realize a lightening that is a basic requirement for a vehicle.

### Prior art documents

### Patent documents

Patent document 1: JP-A-2010-173556
Patent document 2: Japanese Patent No. 4,211,485
Patent document 3: Japanese Patent No. 4,025,008

DE 1005167 A1 discloses a structure for a front section of a vehicle body made of a thermoplastic resin comprising an upper support member made of metal and comprising at least a part of a thermoplastic resin.

EP 1 211 164 A2 discloses a radiator support structure of a motor vehicle, wherein a radiator core support structure comprises an upper elongate member made of metal (10), and a lower elongate member (14) made of metal, the connection between each of the pillar portions (19) and each of the upper and lower elongate members being integrally carried out by injection molding. The radiator support structure of a vehicle solves the problem of low rigidity when an associated motor vehicle is subjected to a vehicle collision, particularly head-on condition.

DE 102004007571 A1 discloses a front support structure for a motor vehicle having at least one pedestrian-supporting transverse member in the width direction of the vehicle. The pedestrian-protecting transverse member is integrally molded from a plastic material.

FR 2783795 A1 discloses a front panel comprising a plastic frame reinforced by a top metal section extending over the whole width of the panel and provided with a structure for fixing it to the vehicle structural elements. The section is a directly mounted section and force-fitted on a crosspiece of the plastic frame, both the section and the crosspiece comprising mutually fitting structure and co-operating elements for crimping the section on the crosspiece.

### Summary of the Invention

### Problems to be solved by the Invention

Accordingly, paying attention to the above-described present circumstances, an object to the present invention to provide a structure for a front section of a vehicle body capable of reducing a force of impact at an initial stage at the time of collision with a pedestrian and absorbing a collision energy in order to enhance pedestrian-protecting properties at the time of collision, and to achieve it making the vehicle lighter while ensuring a necessary rigidity as the structure.

### Means for solving the Problems

To achieve the above-described object, a structure for a front section of a vehicle body according to the present invention is made of at least fiber-reinforced resin and comprises as constituent elements an upper section that extends in a width direction of a vehicle in an upper part of the structure, a lower section that extends in the width direction of the vehicle in a lower part of the structure, two side sections that are connected to the upper section and the lower section on both ends thereof in the width direction of the vehicle and extend in a height direction of the vehicle body, and upper side sections that extend from both ends of the upper section in a rearward direction of the vehicle body, and is characterized in that the upper section is configured as follows:
a) a first portion, excluding a central section in an extension direction of the upper section extending in the width direction of the vehicle, has a roughly U-shaped cross-section open in the rearward direction of the vehicle body;
b) the first portion is configured to have an integrated structure of a metal frame with a roughly L-shaped cross-section that has a wall that follows an upper surface and a vertical surface of the roughly U-shaped cross-section and a fiber-reinforced resin frame with an approximately U-shaped cross-section that has a wall that follows the upper surface, the vertical surface and a lower surface of the roughly U-shaped cross-section; and
c) a second portion, which is the central section in the extension direction of the upper section extending in the width direction of the vehicle, has an extension section of the metal frame that has a wall that follows at least an extended surface of the upper surface and an extended surface of the vertical surface of the roughly U-shaped cross-section at the first portion, and the extension section of the metal frame constitutes an upper section formation section made solely of metal.

Here, the "made of at least fiber-reinforced resin" means that basically it is formed from a fiber-reinforced resin, but for attachment and the like with another member, it is possible to attach thereto or incorporate by insert molding thereinto metal parts and the like.

In such a vehicle body front section structure according to the present invention, because it is configured from a fiber-reinforced resin almost through the whole although a metal frame is included in the upper section, it is possible to ensure the strength and the rigidity of the whole of the structure at high levels as well as to achieve making it lighter. In this vehicle body front section structure, the first portion of the upper section is formed as an integrated structure of a metal frame with a roughly L-shaped cross-section that has a wall that follows an upper surface and a vertical surface of the above-described roughly U-shaped cross-section and a fiber-reinforced resin frame with an approximately U-shaped cross-section that has a wall that follows the upper surface, the vertical surface and a lower surface of the above-described roughly U-shaped cross-section. Namely, by forming the upper section with a metal, a frame can be formed using a high elasticity of the metal. Further, by forming it as a roughly L shape, the weight of the metal frame can be made lighter than a case where a roughly rectangular closed cross-section is formed by putting together metal frames each with a roughly L-shaped cross-section, and it can have a high protecting property at the time of collision with a pedestrian. On the other hand, although the flexural rigidity of the roughly L-shaped metal frame greatly decreases as compared with that of a frame with a closed cross-section, this problem is solved by employing the integrated structure with the resin frame. Namely, in the metal frame, a high elastic modulus of the metal is utilized, and on the other hand, in the resin frame, by forming it as the approximately U-shaped cross-section, the geometrical moment of inertia, that is poor only by the roughly L-shaped metal frame, is increased. Consequently, it becomes possible to ensure a rigidity necessary for the vehicle body front section structure. Because the flexural rigidity of the cross-section of the above-described upper section in the vertical direction of the vehicle body can be maintained to be high by the upper surface of the roughly L-shaped metal frame and the upper and lower surfaces of the approximately U-shaped resin frame, a sufficiently high rigidity can be ensured at the time when a load is applied from a hood, etc. On the other hand, with respect to the flexural rigidity in the forward/rearward direction, although a necessary rigidity as a vehicle build frame is ensured by the vertical surface of the roughly L-shaped metal frame and the vertical surface of the approximately U-shaped resin frame, it becomes smaller than the rigidity in the vertical direction. Therefore, it becomes possible to absorb an impact energy due to deformation of the frame after collision with a pedestrian. Then, if this frame made of the fiber-reinforced resin with the approximately U-shaped cross-section extends over the entire length of the upper section, the strength and the rigidity of the upper section are increased, but in the present invention, in the second portion which is the central section in the extension direction of the upper section, the fiber-reinforced resin frame is not extended at a form of the approximately U-shaped cross-section as it is, the fiber-reinforced resin frame is not provided at all, or, even if provided, only an extended wall, that follows the lower surface of the approximately U-shaped cross-section, is provided. As to the metal frame at this portion, the extension section having a wall that follows at least an extended surface of the upper surface and an extended surface of the vertical surface of the roughly U-shaped cross-section is provided, and this extension section of the metal frame constitutes an upper section formation section made solely of metal. Namely, in the second portion which is the central section in the extension direction of the upper section, the metal frame is exposed substantially over its entire surface, and in the exposed section, the fiber-reinforced resin frame is not provided. Therefore, in this second portion, because the integrated structure formed by the metal frame and the fiber-reinforced resin frame with the roughly U-shaped cross-section is not configured, as compared with the other portion of the upper section, the weight of the cross-section of the frame becomes small. As a result, particularly with respect to the upper section, when a pedestrian collides with the front section of the vehicle body, it is possible to reduce the force of impact received with the pedestrian from the vehicle body, and the pedestrian - protecting property can be enhanced effectively. Further, because the second portion is formed from a metal, the metal part of the second portion absorbs energy by being plastically deformed at the time of collision with the pedestrian, and because the disruptive fracture of the upper section can also be prevented by a high rupture strength thereof, it can also be prevented that the pedestrian further collides with a great mass part such as an engine part present at a rear position and receives a force of impact therefrom. Therefore, this upper section has both of strength and rigidity for the above-described desired pedestrian-protecting properties. Where, in this vehicle body front section structure according to the present invention, since substantially a new space for installation is not required and there is no rotation part, a space for rotating a member also is not required, a disadvantage with space for installation does not occur, and the present invention can be easily carried out.

In the above-described vehicle body front section structure according to the present invention, it is preferred that the second portion, that is, the portion exposed with the metal frame, is provided in a range extending from a center position to both sides in the extension direction of the upper section at least by 100 mm or more and 200 mm or less. Since an average width of a waist part or a thigh part of a pedestrian is approximately in a range from the 100 mm to the 200 mm, by setting the second portion in such a range, because the exposed portion of the metal frame can be ensured at minimum to be required, the above-described desired pedestrian-protecting properties can be achieved more securely without reducing the rigidity and the like unnecessarily.

Further, a structure can also be employed wherein the metal frame with the roughly L-shaped cross-section provided in the above-described first portion is extended up to the upper side sections, and the upper side sections are integrated with the upper section. Here, the expression "the metal frame is extended up to the upper side sections" means that, when the upper section and the upper side sections are assembled as a vehicle body front section structure, the frame is used at an integrated condition. For example, metal portions having the roughly L-shaped cross-section of the upper section and the upper side sections may be formed separately and they may be integrated by welding and the like, or they may be used as a single frame. By the structure where the metal frame is extended up to the upper side sections and the upper section and the upper side sections are provided integrally, the difference between the rigidity of the integrated part and the rigidity of the side section becomes greater, when a pedestrian collides to the connection part with the side section, the strength of the connection part becomes weaker, and it becomes possible to absorb the impact energy by intentionally causing destruction at this part. Even if the connection part with the side section is broken, because the condition where the upper section and the upper side sections, and the side sections and the lower section, are attached to a vehicle body build frame, can be maintained, it also becomes possible to adequately protect a crew in addition to a pedestrian even after the collision with the pedestrian.

Further, it is also preferred that the lower section, side section and upper side sections in addition to the above-described upper section have roughly U-shaped cross-sections each open in the rearward direction of the vehicle body. By such a structure where substantially all sections have roughly U-shaped cross-sections each open in the rearward direction of the vehicle body (in one direction), the mold removal at the time of molding a vehicle body front section structure made of a fiber-reinforced resin can be facilitated, and it becomes possible to integrally mold the whole thereof. In case of injection molding, as the matrix resin of the fiber-reinforced resin used for forming the structure, in particular, a thermoplastic resin is preferably used. Further, as the reinforcing fibers, it is preferred to use short fibers, and whereby, the reinforcing fibers of short fibers can be injected into a mold at a good condition together with the matrix resin. The kind of the reinforcing fibers is not particularly restricted, and carbon fibers, glass fibers, aramide fibers, and further, hybrid reinforcing fibers combining these fibers can be used. However, from the viewpoint of being able to achieving a light weight while ensuring easiness of molding, strength and rigidity, use of carbon fibers is preferred. Where, it is not necessary that the whole of the reinforcing fibers are carbon fibers, and other fibers may be contained. By containing carbon fibers as a part of or the whole of the reinforcing fibers of the fiber-reinforced resin, it becomes possible to improve the moldability, to ensure the strength and rigidity, and to make the weight lighter.

Further, in the vehicle body front section structure according to the present invention, it is also one of preferred embodiments that the width in the forward/rearward direction of the vehicle body of the lower section is greater than that of the upper section. Namely, in the vehicle body front section structure according to the present invention, although a structure can be employed wherein all parts have roughly U-shaped cross-sections each open in the rearward direction of the vehicle body so that the whole of the frame can be integrally molded by injection molding, in such a case, the structure tends to become low in torsional rigidity. In particular, in case where a load in the forward/rearward direction of the vehicle body operates from a front side member to the vehicle body front section structure, it causes a deformation that the lower section is twisted relatively to the upper section. Therefore, since the strength and the rigidity are required to be adequately increased as the whole of the vehicle body front section structure, in order to satisfy this requirement as much as possible, the torsional rigidity is enhanced by making the width of the lower section side in the forward/rearward direction of the vehicle body relatively greater.

Further, as a further preferable embodiment, similarly, the rigidity as the whole of the vehicle body front section structure can be further enhanced by a structure wherein, with respect to the width of each of the side sections in the forward/rearward direction of the vehicle body, that of a portion side connected with the lower section is greater than that of a portion side connected with the upper section.

Furthermore, from a similar purpose, it is also preferred that a rigidity increasing element is provided in the roughly U-shaped cross-section of each of the side sections. Further, it is also preferred that a rigidity increasing element is provided to each end of the lower section for increasing a rigidity at the each end as compared with rigidities at portions other than the each end. Such a rigidity increasing element can be formed, for example, from a rib or a wall thickness increasing structure.

### Effect according to the Invention

Thus, in the vehicle body front section structure according to the present invention, by forming the upper section from the metal frame and the frame made of the fiber-reinforced resin and forming a specified portion at a central section which is not covered with the fiber-reinforced resin and in which the metal frame is exposed, the weight of the cross-section of the frame of the central section of the upper section, with which a pedestrian collides, is reduced, thereby realizing a vehicle body front section structure having a high pedestrian-protecting property capable of reducing an impact force received with the pedestrian from the vehicle body front section structure at the time of collision. Further, it becomes possible to achieve this desirable property without increasing a space for installation while ensuring a rigidity and a strength required for the vehicle body and satisfying lightening of the vehicle body.

### Brief explanation of the drawings

[Fig. 1] Fig. 1 is a perspective view of a structure for a front section of a vehicle body according to an embodiment of the present invention as viewed from the front side.
[Fig. 2] Fig. 2 is a perspective view of the vehicle body front section structure depicted in Fig. 1 as viewed from the rear side.
[Fig. 3] Fig. 3 shows a cross-sectional view of an upper section in the vehicle body front section structure depicted in Fig. 1 as viewed along A-A line of Fig. 1 (Fig. 3 (A)), and cross-sectional views showing various embodiments of a portion of the upper section as viewed along B-B line of Fig. 1 (Fig. 3 (B), (C) and (D)).
[Fig. 4] Fig. 4 is an enlarged partial perspective view of the vehicle body front section structure depicted in Fig. 2.
[Fig. 5] Fig. 5 is a perspective view showing an example of a conventional vehicle body front section structure.
[Fig. 6] Fig. 6 is a schematic explanation diagram showing an example of a case where a pedestrian collides with a front part of a vehicle body having the vehicle body front section structure depicted in Fig. 5.
[Fig. 7] Fig. 7 is a graph showing an example of a relationship between force of impact and time after collision depicted in Fig. 6.

### Embodiments for carrying out the Invention

Hereinafter, embodiments of the present invention will be explained referring to figures.

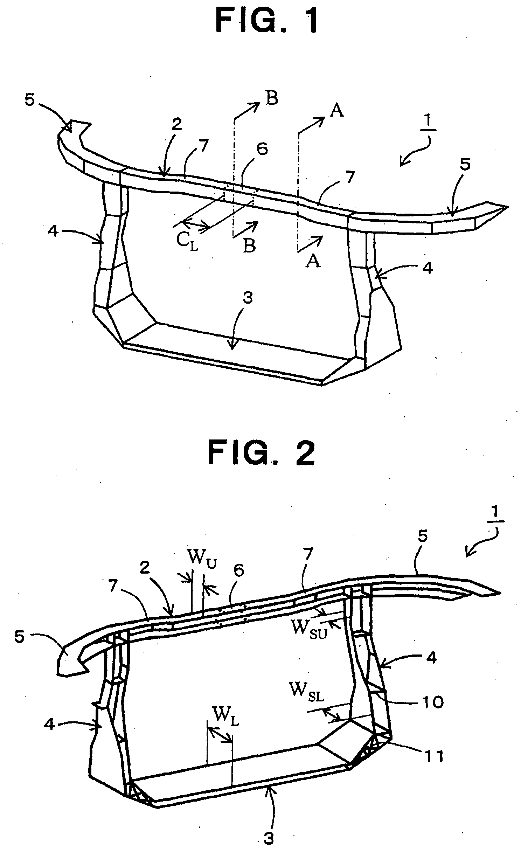

Fig. 1 and Fig. 2 show a structure for a front section of a vehicle body 1 according to an embodiment of the present invention. The vehicle body front section structure 1 is formed by using at least a fiber-reinforced resin, and made as a structure wherein the whole of the fiber-reinforced resin part is integrally molded by injection molding. As constituent elements, the vehicle body front section structure 1 comprises an upper section 2 that extends in the width direction of the vehicle in an upper part of the structure, a lower section 3 that extends in the width direction of the vehicle in a lower part of the structure, two side sections 4 that are connected to the upper section 2 and the lower section 3 on both ends thereof in the width direction of the vehicle and extend in the height direction of the vehicle body, and upper side sections 5 that extend from both ends of the upper section 2 in the rearward direction of the vehicle body. As shown in Fig. 2, all sections of lower section 3, side sections 4 and upper side sections 5 in addition to upper section 2 have roughly U-shaped cross-sections each open in the rearward direction of the vehicle body, and by enabling to remove a mold in the rearward direction of the vehicle body at the time of molding, the whole is integrally molded by injection molding.

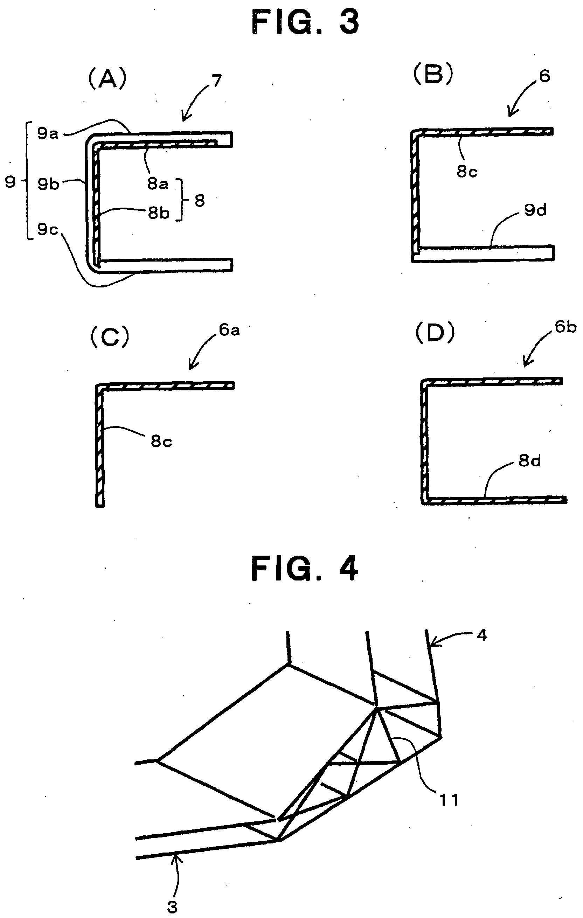

In the above-described vehicle body front section structure 1, upper section 2 has the following structure. First, a first portion 7, excluding a central section in the extension direction of upper section 2 extending in the width direction of the vehicle, as shown also in Fig. 3 (A), has a roughly U-shaped cross-section open in the rearward direction of the vehicle body, and this first portion 7 is configured as an integrated structure of a metal frame 8 with a roughly L-shaped cross-section that has walls 8a, 8b that follow an upper surface and a vertical surface of the roughly U-shaped cross-section and a fiber-reinforced resin frame 9 with an approximately U-shaped cross-section that has walls 9a, 9b, 9c that follow the upper surface, the vertical surface and the lower surface of the roughly U-shaped cross-section. Further, a second portion 6, which is the central section in the extension direction of upper section 2 extending in the width direction of the vehicle, as shown in Fig. 3 (B), has an extension section 8c of metal frame 8 that has a wall that follows the extended surface of the upper surface and the extended surface of the vertical surface of the above-described roughly U-shaped cross-section at the above-described first portion 7, and the extension section 8c of the metal frame 8 constitutes an upper section formation section made solely of metal (namely, the metal surface is exposed without being covered with the fiber-reinforced resin). Then, in this embodiment, as the wall made of the fiber-reinforced resin, so as not to cover extension section 8c of metal frame 8, only an extension section 9d of wall 9c following the lower surface of the above-described roughly U-shaped cross-section of fiber-reinforced resin frame 9 is left in the second portion 6. Here, as aforementioned, the above-described metal frame 8 may be extended up to upper side sections 5, and in this connection, a structure can also be employed wherein the upper side sections 5 are integrated with upper section 2.

Where, second portion 6 at the central section of the above-described upper section 2 can be formed as other embodiments different from the embodiment shown in Fig. 3 (B), as shown in Fig. 3 (C) and (D). In the embodiment of second portion 6a shown in Fig. 3 (C), only an extension section 8c of the above-described metal frame 8 is provided, and the extension section 9d of the fiber-reinforced resin frame 9 is not provided. Further, in the embodiment of second portion 6b shown in Fig. 3 (D), the extension section of the fiber-reinforced resin frame 9 is not provided at all, and only an extension section 8d of the metal frame 8 with the roughly U-shaped cross-section is provided.

Even if any embodiment for the second portion is employed, as aforementioned, first, by forming vehicle body front section structure 1 using the fiber-reinforced resin, lightening of the whole of the structure is achieved while ensuring the strength and rigidity of the whole of the structure to be high. Then, in particular, by forming first portion 7 of upper section 2 as the integrated structure of metal frame 8 with the roughly 1-shaped cross-section and fiber-reinforced resin frame 9 with the approximately U-shaped cross-section, while ensuring a rigidity required for the frame by utilizing a high elastic modulus of the metal and a sectional dimension effect of the resin frame, the metal frame part can be lightened as compared with a case of forming a roughly rectangular closed cross-section, and the pedestrian-protecting property at the time of collision can be enhanced. Further, in particular, in second portion 6 which is the central section of upper section 2, since metal frame 8 is exposed and the integrated structure of the metal frame 8 and fiber-reinforced resin frame 9 is not formed, as compared with other parts of the upper section, the weight of the cross-section of the frame is lowered, it becomes possible to reduce the force of impact received with a pedestrian from the vehicle body when the pedestrian collides with the front part of the vehicle body, and the pedestrian-protecting property can be further enhanced efficiently. Furthermore, because second portion 6 is formed from the metal, the metal part of the second portion 6 absorbs energy by being plastically deformed at the time of collision with the pedestrian, and because the disruptive fracture of upper section 2 can also be prevented by a high rupture strength thereof, it can also be prevented that the pedestrian further collides with a great mass part such as an engine part present at a rear position relatively to the vehicle body front section structure 1 and receives a force of impact therefrom.

With respect to a length C_{L} of the above-described second portion 6 in the extension direction of upper section 2, for example, it is preferred that the second portion 6 is set so as to be provided in a range extending from a center position to both sides in the extension direction of the upper section 2 at least by 100 mm or more and 200 mm or less. This is a desirable range for protecting a pedestrian more effectively at the time of collision, and considering that an average width of a waist part or a thigh part of a pedestrian is approximately in a range from 100 mm to 200 mm and considering that the rigidity and the like is not reduced unnecessarily by suppressing the exposed portion of metal frame 8 at minimum to be required, such a range is set particularly from the viewpoint of protecting a pedestrian.

Further, as shown in Fig. 2, a width W_{L} in the forward/rearward direction of the vehicle body of lower section 3 is set to be greater than a width W_{U} in the forward/rearward direction of the vehicle body of upper section 2. As aforementioned, although the whole of the frame of vehicle body front section structure 1 can have a form having a roughly U-shaped cross-section open in the rearward direction of the vehicle body so that the whole of the frame can be integrally molded by injection molding, in such a case, it becomes a structure which tends to be lowered with respect to torsional rigidity. In particular, in case where a load in the forward/rearward direction of the vehicle body operates to vehicle body front section structure 1 from a front side member (refer to Fig. 5), a deformation tends to be caused wherein lower section 3 is twisted relatively to upper section 2. In order to suppress this, it is desired to adequately enhance the strength and rigidity as the whole of vehicle body front section structure 1, and in order to satisfy this requirement as much as possible, the torsional rigidity is enhanced by making the width W_{L} in the forward/rearward direction of the vehicle body of lower section 3 side relatively great.

Further, as shown in Fig. 2, similarly, the rigidity as the whole of vehicle body front section structure 1 is further enhanced by setting such that, with respect to the width of each of side sections 4 in the forward/rearward direction of the vehicle body, a width W_{SL} of the portion side connected with lower section 3 is greater than a width W_{SU} of the portion side connected with upper section 2.

Furthermore, from a similar purpose, as shown in Fig. 2, a rib 10 as a rigidity increasing element is provided in the roughly U-shaped cross-section of each of side sections 4. Further, as shown in Fig. 2 and Fig. 4, a rib 11 as a rigidity increasing element is provided to each end of lower section 3 for increasing the rigidity at the each end as compared with rigidities at portions other than the each end. In the example shown in the figures, rib 11 is disposed in a truss-like form, thereby increasing the rigidity at this part greatly. As such a rigidity increasing element, except the rib, it can also be formed from a structure which increases a thickness of a wall made of a fiber-reinforced resin.

Thus, in the present invention, in addition to employ a specified structure for upper section 2, even for other sections, structures added with various kinds of devices can be employed.

### Industrial Applications of the Invention

The structure for the front section of a vehicle body according to the present invention can be applied to any vehicle body, in particular, requiring improvement of pedestrian-protecting properties at the time of collision while ensuring a rigidity required to the structure.

### Explanation of symbols

1: vehicle body front section structure
2: upper section
3: lower section
4: side section
5: upper side section
6, 6a, 6b: central section of upper section (second portion)
7: first portion excluding central section of upper section
8: metal frame
8a: wall following upper surface of roughly U-shaped cross-section
8b: wall following vertical surface of roughly U-shaped cross-section
8c, 8d: extension section of metal frame
9: fiber-reinforced resin frame
9a: wall following upper surface of roughly U-shaped cross-section
9b: wall following vertical surface of roughly U-shaped cross-section
9c: wall following lower surface of roughly U-shaped cross-section
9d: extension section of fiber-reinforced resin frame
10, 11: rib as rigidity increasing element

## Claims

1. A structure for a front section (1) of a vehicle body wherein said structure is made of at least fiber-reinforced resin and comprises as constituent elements an upper section (2) that extends in a width direction of a vehicle in an upper part of said structure, said upper section (2) having a first portion (7) extending in said width direction of said vehicle, which has a roughly U-shaped cross-section open in said rearward direction of said vehicle body, a lower section (3) that extends in said width direction of said vehicle in a lower part of said structure, two side sections (4) that are connected to said upper section (2) and said lower section (3) on both ends thereof in said width direction of said vehicle and extend in a height direction of said vehicle body,
and upper side sections (5) that extend from both ends of said upper section,
**characterized in that**
said upper side sections (5) extend from both ends of said upper section in a rearward direction of said vehicle body and said upper section (2) is configured as follows:
a) said first portion (7) excludes a central section in an extension direction of said upper section (2) extending in said width direction of said vehicle;
b) said first portion (7) is configured to have an integrated structure of a metal frame (8) with a roughly L-shaped cross-section that has a wall (8a, 8b) that follows an upper surface and a vertical surface of said roughly U-shaped cross-section and a fiber-reinforced resin frame (9) with an approximately U-shaped cross-section that has a wall (9a, 9b, 9c) that follows said upper surface, said vertical surface and a lower surface of said roughly U-shaped cross-section; and
c) a second portion (6), which is said central section in said extension direction of said upper section (2) extending in said width direction of said vehicle, has an extension section (8c) of said metal frame (8) that has a wall that follows at least an extended surface of said upper surface and an extended surface of said vertical surface of said roughly U-shaped cross-section at said first portion (7), and said extension section (8c) of said metal frame (8) constitutes an upper section formation section made solely of metal.

2. The structure for a front section of a vehicle body according to claim 1, wherein said second portion (6) is provided in a range extending from a center position to both sides in said extension direction of said upper section (2) at least by 100 mm or more and 200 mm or less.

3. The structure for a front section of a vehicle body according to claim 1 or 2, wherein said metal frame (8) with said roughly L-shaped cross-section provided in said first portion (7) is extended up to said upper side sections (5), and said upper side sections are integrated with said upper section (2).

4. The structure for a front section of a vehicle body according to any of claims 1 to 3, wherein said lower section (3), side section (4) and upper side sections (5) in addition to said upper section (2) have roughly U-shaped cross-sections each open in said rearward direction of said vehicle body.

5. The structure for a front section of a vehicle body according to any of claims 1 to 4, wherein said structure is integrally molded by injection molding.

6. The structure for a front section of a vehicle body according to any of claims 1 to 5, wherein a width in a forward/rearward direction of said vehicle body of said lower section (3) is greater than that of said upper section (2).

7. The structure for a front section of a vehicle body according to any of claims 1 to 6, wherein with respect to a width of each of said side sections (4) in a forward/rearward direction of said vehicle body, that of a portion side connected with said lower section (3) is greater than that of a portion side connected with said upper section (2).

8. The structure for a front section of a vehicle body according to any of claims 4 to 7, wherein a rigidity increasing element is provided in said roughly U-shaped cross-section of each of said side sections (4).

9. The structure for a front section of a vehicle body according to any of claims 1 to 8, wherein a rigidity increasing element is provided to each end of said lower section (3) for increasing a rigidity at said each end as compared with rigidities at portions other than said each end.

10. The structure for a front section of a vehicle body according to claim 8 or 9, wherein said rigidity increasing element comprises a rib (10, 11) or a wall thickness increasing structure.

## Patentansprüche

1. Struktur für einen vorderen Abschnitt (1) einer Fahrzeugkarosserie, wobei die Struktur aus mindestens einem faserverstärkten Harz hergestellt ist und als Bestandteilselemente Folgendes umfasst:
einen oberen Abschnitt (2), der sich in einer Breitenrichtung eines Fahrzeugs in einem oberen Teil der Struktur ausdehnt, wobei der obere Abschnitt (2) einen ersten Teil (7) aufweist, der sich in der Breitenrichtung des Fahrzeugs ausdehnt und einen in etwa U-förmigen Querschnitt hat, der zur rückwärtigen Richtung der Fahrzeugkarosserie offen ist;
einen unteren Abschnitt (3), der sich in der Breitenrichtung des Fahrzeugs in einem unteren Teil der Struktur ausdehnt;
zwei Seitenabschnitte (4), die mit dem oberen Abschnitt (2) und dem unteren Abschnitt (3) an ihren beiden Enden in der Breitenrichtung des Fahrzeugs verbunden sind und sich in die Höhenrichtung der Fahrzeugkarosserie ausdehnen;
und obere Seitenabschnitte (5), die sich von beiden Enden des oberen Abschnitts aus ausdehnen;
**dadurch gekennzeichnet, dass**
die oberen Seitenabschnitte (5) sich von beiden Enden des oberen Abschnitts in einer rückwärtigen Richtung der Fahrzeugkarosserie ausdehnen und der obere Abschnitt (2) wie folgt gestaltet ist:
a) der erste Teil (7) einen zentralen Abschnitt in einer Ausdehnungsrichtung des oberen Abschnitts (2) ausspart, der sich in der Breitenrichtung des Fahrzeugs ausdehnt;
b) der erste Teil (7) so gestaltet ist, dass er eine integrierte Struktur aus einem Metallrahmen (8) mit einem in etwa L-förmigen Querschnitt, der eine Wand (8a, 8b) hat, die einer oberen Oberfläche und einer vertikalen Oberfläche des in etwa U-förmigen Querschnitts folgt, und einem faserverstärkten Harzrahmen (9) mit einem annähernd U-förmigen Querschnitt aufweist, der eine Wand (9a, 9b, 9c) aufweist, die der oberen Oberfläche, der vertikalen Oberfläche und einer unteren Oberfläche des in etwa U-förmigen Querschnitts folgt; und
c) ein zweiter Teil (6), der der zentrale Abschnitt in der Ausdehnungsrichtung des oberen Abschnitts (2), der sich in der Breitenrichtung des Fahrzeugs ausdehnt, ist, einen Ausdehnungsabschnitt (8c) des Metallrahmens (8) aufweist, der eine Wand aufweist, die mindestens einer ausgedehnten Oberfläche der oberen Oberfläche und einer ausgedehnten Oberfläche der vertikalen Oberfläche des in etwa U-förmigen Querschnitts an dem ersten Teil (7) folgt, und wobei der Ausdehnungsabschnitt (8c) des Metallrahmens (8) einen Strukturabschnitt des oberen Abschnitts darstellt, der ausschließlich aus Metall hergestellt ist.

2. Struktur für einen vorderen Abschnitt einer Fahrzeugkarosserie nach Anspruch 1, wobei der zweite Teil (6) in einem Bereich bereitgestellt ist, der sich mit mindestens 100 mm oder mehr und 200 mm oder weniger von einer Mittelposition aus zu beiden Seiten der Ausdehnungsrichtung des oberen Abschnitts (2) ausdehnt.

3. Struktur für einen vorderen Abschnitt einer Fahrzeugkarosserie nach Anspruch 1 oder 2, wobei der Metallrahmen (8) mit dem in etwa L-förmigen Querschnitt, der in dem ersten Teil (7) bereitgestellt ist, bis zu den oberen Seitenabschnitten (5) ausgedehnt ist und die Seitenabschnitte in den oberen Abschnitt (2) integriert sind.

4. Struktur für einen vorderen Abschnitt einer Fahrzeugkarosserie nach einem der Ansprüche 1 bis 3, wobei der untere Abschnitt (3), der Seitenabschnitt (4) und die oberen Abschnitte (5), zusätzlich zu dem oberen Abschnitt (2), in etwa U-förmige Querschnitte haben, die jeweils zur rückwärtigen Richtung des Fahrzeugs offen sind.

5. Struktur für einen vorderen Abschnitt einer Fahrzeugkarosserie nach einem der Ansprüche 1 bis 4, wobei die Struktur durch Spritzgießen aufgepresst ist.

6. Struktur für einen vorderen Abschnitt einer Fahrzeugkarosserie nach einem der Ansprüche 1 bis 5, wobei in einer Vor/Zurück-Richtung von der Fahrzeugkarosserie eine Breite von dem untern Abschnitt (3) größer als von dem oberen Abschnitt (2) ist.

7. Struktur für einen vorderen Abschnitt einer Fahrzeugkarosserie nach einem der Ansprüche 1 bis 6, wobei, in Bezug auf eine Breite von jedem der Seitenabschnitte (4) in einer Vor/Zurück-Richtung der Fahrzeugkarosserie, die Breite von einer Teilseite, die mit dem unteren Abschnitt (3) verbunden ist, größer ist als die Breite von einer Teilseite, die mit dem oberen Abschnitt (2) verbunden ist.

8. Struktur für einen vorderen Abschnitt einer Fahrzeugkarosserie nach einem der Ansprüche 4 bis 7, wobei ein steifigkeitserhöhendes Element in dem in etwa U-förmigen Querschnitt von jedem der Seitenabschnitte (4) breitgestellt ist.

9. Struktur für einen vorderen Abschnitt einer Fahrzeugkarosserie nach einem der Ansprüche 1 bis 8, wobei ein steifigkeitserhöhendes Element in jedem Ende des unteren Abschnitts (3) bereitgestellt ist, um die Steifigkeit von diesem jeden Ende im Vergleich zu den Steifigkeiten an anderen Teilen als dem jeden Enden zu erhöhen.

10. Struktur für einen vorderen Abschnitt einer Fahrzeugkarosserie nach Anspruch 8 oder 9, wobei das steifigkeitserhöhende Element eine Rippe (10, 11) oder eine die Wand verdickende Struktur umfasst.

## Revendications

1. Structure d'une section avant (1) d'une carrosserie de véhicule, dans laquelle ladite structure est constituée d'une résine renforcée de fibres au moins, et comprend, en tant qu'éléments constitutifs, une section supérieure (2) qui s'étend dans la direction de la largeur d'un véhicule dans une partie supérieure de ladite structure, ladite section supérieure (2) présentant une première partie (7) qui s'étend dans ladite direction de la largeur dudit véhicule, qui présente une section transversale grossièrement en forme de U ouverte dans la direction vers l'arrière de ladite carrosserie de véhicule, une section inférieure (3) qui s'étend dans ladite direction de la largeur dudit véhicule dans une partie inférieure de ladite structure, deux sections latérales (4) qui sont connectées à ladite section supérieure (2) et à ladite section inférieure (3) sur les deux extrémités de celles-ci dans ladite direction de la largeur dudit véhicule, et qui s'étendent dans la direction de la hauteur de ladite carrosserie de véhicule, et des sections latérales supérieures (5) qui s'étendent à partir des deux extrémités de ladite section supérieure ;
**caractérisée en ce que** :
lesdites sections latérales supérieures (5) s'étendent à partir des deux extrémités de ladite section supérieure dans la direction vers l'arrière de ladite carrosserie de véhicule, et ladite section supérieure (2) est configurée de la façon suivante :
a) ladite première partie (7) exclut une section centrale dans une direction d'extension de ladite section supérieure (2) qui s'étend dans ladite direction de la largeur dudit véhicule ;
b) ladite première partie (7) est configurée de façon à présenter une structure intégrée d'un bâti métallique (8) qui présente une section transversale grossièrement en forme de L qui présente une paroi (8a, 8b) qui suit une surface supérieure et une surface verticale de ladite section transversale grossièrement en forme de U, et un bâti en résine renforcée de fibres (9) avec une section transversale approximativement en forme de U qui présente une paroi (9a, 9b, 9c) qui suit ladite surface supérieure, ladite surface verticale et une surface inférieure de ladite section transversale grossièrement en forme de U ; et
c) une deuxième partie (6), qui est ladite section centrale dans ladite direction extension de ladite section supérieure (2) qui s'étend dans ladite direction de la largeur dudit véhicule, présente une section d'extension (8c) dudit bâti métallique (8) qui présente une paroi qui suit au moins une surface étendue de ladite surface supérieure et une surface étendue de ladite surface verticale de ladite section transversale grossièrement en forme de U au niveau de ladite première partie (7), et ladite section d'extension (8c) dudit bâti métallique (8) constitue une section formation de section supérieure constituée seulement de métal.

2. Structure d'une section avant d'une carrosserie de véhicule selon la revendication 1, dans laquelle ladite deuxième partie (6) est prévue dans une plage qui s'étend à partir d'une position centrale vers les deux côtés dans ladite direction d'extension de ladite section supérieure (2), au moins de plus de 100 mm et de moins de 200 mm.

3. Structure d'une section avant d'une carrosserie de véhicule selon la revendication 1 ou la revendication 2, dans laquelle ledit bâti métallique (8) qui présente ladite section transversale grossièrement en forme de L prévue dans ladite première partie (7), est étendu jusqu'auxdites sections latérales supérieures (5), et lesdites sections latérales supérieures sont intégrées à ladite section supérieure (2).

4. Structure d'une section avant d'une carrosserie de véhicule selon l'une quelconque des revendications 1 à 3, dans laquelle ladite section inférieure (3), ladite section latérale (4) et lesdites sections latérales supérieures (5) en plus de ladite section supérieure (2), présentent des sections transversales grossièrement en forme de U, chacune d'elles étant ouverte dans la direction vers l'arrière de ladite carrosserie de véhicule.

5. Structure d'une section avant d'une carrosserie de véhicule selon l'une quelconque des revendications 1 à 4, dans laquelle ladite structure est moulée-d'une pièce grâce à un moulage par injection.

6. Structure d'une section avant d'une carrosserie de véhicule selon l'une quelconque des revendications 1 à 5, dans laquelle la largeur dans la direction vers l'avant / vers l'arrière de ladite carrosserie de véhicule de ladite section inférieure (3), est supérieure à celle de ladite section supérieure (2).

7. Structure d'une section avant d'une carrosserie de véhicule selon l'une quelconque des revendications 1 à 6, dans laquelle, en ce qui concerne la largeur de chacune desdites sections latérales (4) dans la direction vers l'avant / vers l'arrière de ladite carrosserie de véhicule, celle d'un côté de partie connecté à ladite section inférieure (3), est supérieure à celle d'un côté de partie connecté à ladite section supérieure (2).

8. Structure d'une section avant d'une carrosserie de véhicule selon l'une quelconque des revendications 4 à 7, dans laquelle un élément d'accroissement de la rigidité est prévu dans ladite section transversale grossièrement en forme de U de chacune desdites sections latérales (4).

9. Structure d'une section avant d'une carrosserie de véhicule selon l'une quelconque des revendications 1 à 8, dans laquelle un élément d'accroissement de la rigidité est prévu à chaque extrémité de ladite section inférieure (3) de façon à accroître la rigidité au niveau de chaque dite extrémité par rapport aux rigidités au niveau des parties autres que chaque dite extrémité.

10. Structure d'une section avant d'une carrosserie de véhicule selon la revendication 8 ou la revendication 9, dans laquelle ledit élément d'accroissement de la rigidité comprend une nervure (10, 11) ou une structure d'accroissement de l'épaisseur de paroi.
